# EUROPÄISCHE PATENTSCHRIFT

(11) **EP 1 415 138 B1**
(45) Veröffentlichungstag und Bekanntmachung des Hinweises auf die Patenterteilung: **18.10.2006**
(21) Anmeldenummer: 02794599.7
(22) Anmeldetag: 12.08.2002
(51) Int. Cl.: G01N 21/35

(54) **MESSVORRICHTUNG ZUR KONZENTRATIONSBESTIMMUNG VON GASEN DURCH IR-ABSORPTION**
MEASURING DEVICE FOR DETERMINING THE CONCENTRATION OF GASES BY INFRARED ABSORPTION
DISPOSITIF DE MESURE DESTINE A LA DETERMINATION DE LA CONCENTRATION DE GAZ PAR ABSORPTION INFRAROUGE

(30) Priorität: 10.08.2001 DE 10138302
(43) Veröffentlichungstag der Anmeldung: 06.05.2004
(73) Patentinhaber: Thermo Electron LED GmbH, 63505 Langenselbold (DE)
(72) Erfinder: STAHL, Hermann, 61130 Nidderau-Ostheim (DE); BASCHANT, Dieter, Dr., 06786 Vockerode (DE); GATZMANGA, Heinz, Dr., 06366 Köthen (DE); JUPPE, Heinz, 06844 Dessau (DE)
(74) Vertreter: Lang, Friedrich
(86) Internationale Anmeldenummer: PCT/EP2002/009010
(87) Internationale Veröffentlichungsnummer: WO 2003/014713

(56) Entgegenhaltungen:
- WO-A-00/75640
- DE-A- 4 413 670
- US-A- 4 687 337
- US-A- 5 153 436
- US-A- 5 464 982

## Beschreibung

Die Erfindung betrifft eine Messvorrichtung zur Konzentrationsbestimmung von Gasen durch Infrarotabsorption mit einem gasdichten Gehäuse, in welchem sich eine modulierbare Strahlenquelle und zwei Strahlungsdetektoren befinden, wobei einer der Strahlungsdetektoren als Messdetektor und der andere als Referenzdetektor geschaltet ist, und
der Strahlengang zwischen Strahlenquelle und Strahlungsdetektoren in wenigstens drei Teil-Strecken aufgeteilt ist, von denen die erste Strecke sich zwischen der Strahlenquelle und einem ersten infrarotdurchlässigen Fenster befindet, die zweite Strecke als dem Gas zugängliche Mess-Strecke ausgebildet ist und vom ersten infrarotdurchlässigen Fenster zu einem zweiten infrarotdurchlässigen Fenster reicht und die dritte Strecke sich zwischen dem zweiten infrarotdurchlässigen Fenster und den Strahlungsdetektoren befindet.

Der als "Infrarot" bezeichnete Spektralbereich wird nachfolgend auch als "IR-Strahlung" angegeben.

Aus der DE 19713928 C1 ist eine Messvorrichtung zur Konzentrationsbestimmung von Gasen durch IR-Absorption mit zwei gleichen Strahlungsquellen und zwei Strahlungsdetektoren bekannt, die trotz auftretender Verschmutzung oder Strahlungsabdeckung der äußeren den Gasen oder Gemischen von Gasen ausgesetzten optischen Flächen sowie möglicher mechanischer Dejustagen stabile Messwerte liefern kann. Dabei sind die beiden Strahlungsdetektoren mit jeweils einem optischen Konzentrator zur Strahlungsbündelung versehen und zusammen mit den beiden gleichen Strahlungsquellen und mit einem Strahlenteiler in einem gasdichten Gehäuse angeordnet, wobei die eine Strahlungsquelle durch ein IR-durchlässiges Fenster auf einen Planspiegel außerhalb des gasdichten Gehäuses ausgerichtet ist und der am Planspiegel reflektierte Strahlengang durch das IR-durchlässige Fenster auf den Strahlenteiler fällt. Somit wird sowohl die am Planspiegel reflektierte Strahlung der ersten Strahlungsquelle als auch die der zweiten Strahlungsquelle auf beide Strahlungsdetektoren aufgeteilt, wobei der erste Strahlungsdetektor als Messdetektor und der zweite Strahlungsdetektor als Referenzdetektor dient.

Nach einem ähnlichen Prinzip arbeiten die aus der US 5,153,436 A und aus der US 5,464,982 A bekannten Vorrichtungen. Bei beiden handelt es sich um Überwachungsapparate zur Kontrolle des CO₂₋Gehalts in der Atemluft eines Patienten mittels Infrarotabsorption. Von einer Strahlenquelle ausgehende Infrarotstrahlung einer Mess- und Referenzwellenlänge durchdringt eine Messkammer, durch welche die Atemluft des Patienten geleitet wird, und wird anschließend von einem Messdetektor und einem Referenzdetektor detektiert. Die Messkammer kann zur Sterilisation aus dem Gerät entnommen oder ausgewechselt werden. An den Stellen, wo die Strahlung aus dem Gehäuse des Überwachungsapparates in die Messkammer eintritt und umgekehrt, sind sowohl Messkammer als auch Gehäuse jeweils mit infrarotdurchlässigen Fenstern gegenüber Verschmutzungen und Störgas abgedichtet.

Weitere Geräte zur Analyse von Gasen durch Strahlungsabsorption sind aus der WO 00/75640 A1 und aus der DE 4413670 A1 bekannt. Letztgenannte Druckschrift offenbart ein Gerät, mit dem die Konzentration von bis zu 15 verschiedenen Komponenten in einem Gasgemisch analysiert werden können. Schließlich ist aus der US 4,687,337 A eine Apparatur zur Bestimmung der Extinktionslänge für Infrarotstrahlung durch Gasgemische bekannt. Die Kenntnis der Extinktionslänge ist eine Grundlage zur Konzentrationsbestimmung durch Infrarotabsorption. Bei keinem der Geräte ist eine Trennung von Messkammer und den optischen Komponenten wie den Detektoren vorgesehen.

Als problematisch ist der Einsatz solcher bekannter IR-Sensoren zur CO₂-Messung in Brutschränken anzusehen, da insbesondere Strahlenteiler, Interferenzfilter sowie der Sensorteil durch CO₂-Dampfgemisch im Falle der Sterilisation zerstört werden könnte. Darüber hinaus kann auch die IR-Strahlenquelle mit ihrem Reflektorsystem durch hohe Temperaturen - wie sie beispielsweise im Brutschrank bei Sterilisation entstehen - beschädigt werden.

Aufgabe der Erfindung ist es, einen auf IR-Analyse basierenden CO₂-Gassensor zum Einsatz in einem Brutschrank anzugeben, der die in der Sterilisationsphase vorhandenen hohen Temperaturen zwecks Desinfektion ohne Zerstörung der Messelektronik übersteht; weiterhin soll zur Realisierung einer schnellen Messung ein möglichst kleines CO₂-Volumen gemessen werden.

Die Aufgabe wird durch eine Vorrichtung mit den Merkmalen des unabhängigen Anspruchs 1 gelöst.

Die eigentliche Mess-Strecke befindet sich erfindungsgemäß in einer das Gehäuse nach außen abdichtenden Küvette, wobei die Wärmeformbeständigkeit bis zu einer Temperatur von wenigstens 100 °C reicht.

Vorteilhafte Ausgestaltungen der Erfindung sind in den Ansprüchen 2 bis 11 angegeben.

Als besonders vorteilhaft erweist sich, dass der sterilisierbare Sensor einen verhältnismäßig geringen technischen Aufwand zur Herstellung und Wartung benötigt.

In einer bevorzugten Ausgestaltung der Erfindung befindet sich im Strahlungsgang der Strahlenquelle wenigstens ein Strahlungsteiler. Die im Strahlengang der Mess-Strecke befindlichen Fenster bestehen aus Kalziumfluorid, als Werkstoff der Küvette ist (außerhalb der Fenster) Aluminium oder Messing vorgesehen.

In einer bevorzugten Ausführungsform befindet sich im abgeschlossenen Inneren des Gehäuses wenigstens ein Absorptionsmittel für Kohlendioxid.

Vorzugsweise ist eine einzige Strahlenquelle vorgesehen, die auf ihrer der Messung abgewandten Seite einen Reflektor aufweist. Die Strahlungsdetektoren sind zusammen mit dem Strahlungsteiler in einem das Innere des Gehäuses abdichtenden Detektor-Modul angeordnet, der mit dem Gehäuse lösbar verbunden ist.

Die Strahlenquelle ist in einem das Innere des Gehäuses abdichtenden Teilmodul aus Aluminium angeordnet, welche eine Ausnehmung in Form eines Rotationsellipsoids zur Bildung eines Reflektors aufweist.

In einer bevorzugten Ausgestaltung der Erfindung besteht die Messvorrichtung aus einer modulierbaren IR-Strahlungsquelte, einem Reflektor, einer durch zwei IR-durchlässige Fenster abgeschlossenen Küvette als Messkammer, die mit einem durch Hochtemperatur sterilisierbaren Messraum verbunden ist, der das zu messende Gas aufweist. Zur Gewinnung eines Messstrahls mit der Messwellenlänge und zur Gewinnung eines Referenzstrahls mit der Referenzwellenlänge sind Strahlungsdetektoren mit vorgelagerten optischen Filtern zur Wandlung der Strahlungsleistung des Mess- und Referenzstrahls in elektrische Signale vorgesehen. Die von den Detektoren abgegebenen Signale werden einer Auswerteschaltung zur Ermittlung der Konzentration der zu messenden Glaskomponente zugeführt, wobei vorzugsweise die Differenz und/oder der Quotient der Mess- und Referenzstrahlungsleistung gebildet wird. Dabei sind Küvette, Strahlungsquelle, Reflektor sowie die Filter zur Gewinnung des Mess- und Referenzstrahls und die Detektoren zur Messung der Strahlungsleistung des Mess- und Referenzstrahls in einem gasdicht abgeschlossenen Gehäuse derart angeordnet, dass eine wiederholte Erhitzung und/oder Dampfsterilisation des Messraumes keine Schädigung von Reflektor, Strahler, sowie von Strahlführungsmitteln, Filtern bzw. Selektionsmittel und Detektoren hervorruft und dadurch eine langzeitstabile Gaskonzentrationsmessung ermöglicht wird.

Das Messvolumen ist im Verhältnis zum Sensorvolumen klein, wobei das Fenstermaterial und Messkammermaterial hinsichtlich ihrer thermischen Ausdehnungskoeffizienten aufeinander abgestimmt sind, so dass thermische Belastungen die Dichtheit der Messkammer nicht beeinträchtigen.

Zwischen der Messkammer und Strahlungsquelle mit Reflektor sowie zwischen der Messkammer und den Mitteln zur Filterung und Gewinnung des Mess- und Referenzstrahls sowie zur Messung der Strahlungsleistung des Mess- und Referenzstrahls ist ein solcher Abstand und ein solches Material vorhanden, dass die thermische Belastung während der Sterilisation nicht zur Beeinträchtigung der optischen Eigenschaften der Strahlungsquelle, des Reflektors sowie der Mittel zur Filterung bzw. Gewinnung des Mess- und Referenzstrahls und zur Messung der Strahlungsleistung des Mess- und Referenzstrahls führt.

Das Verhältnis der Länge der Mess-Strecke zur Länge der im Inneren des Gehäuses geführten Teil-Strecken des Strahlenganges liegt im Bereich von 1:4 bis 1:10.

Der Strahlengang zwischen Strahlungsquelle und Strahlungsempfänger ist gegen die Messkammer und gegen die Umgebung derart abgedichtet, dass der Strahlengang nahezu messgasfrei ist. Dabei steht das im Strahlengang - außerhalb der Küvette - vorhandene Gas in Kontakt zu einem Gasraum, in dem sich ein Absorptionsmittel für die zu messende Gaskomponente befindet, so dass die Messgasfreiheit des Strahlenganges langzeitstabil gewährleistet wird.

Es ist weiterhin möglich, die erste und dritte Teilstrecke des Strahlenganges in jeweils für sich abgeschlossenen Innenräumen des Gehäuses vorzusehen. In einem solchen Fall wird vorzugsweise jeder der beiden Innenräume mit einem Absorptionsmittel für die zu messende Gaskomponente (CO₂) ausgestattet.

Weiterhin sind Heizmittel vorhanden, um die Temperatur der Messkammer anzuheben und so einer Kondensation in der Messkammer vorzubeugen, wobei das Gehäuse, welches Strahler, Messkammer und Detektoren umgibt, eine Wärmeformbeständigkeit bis zu wenigstens 100 °C aufweist.

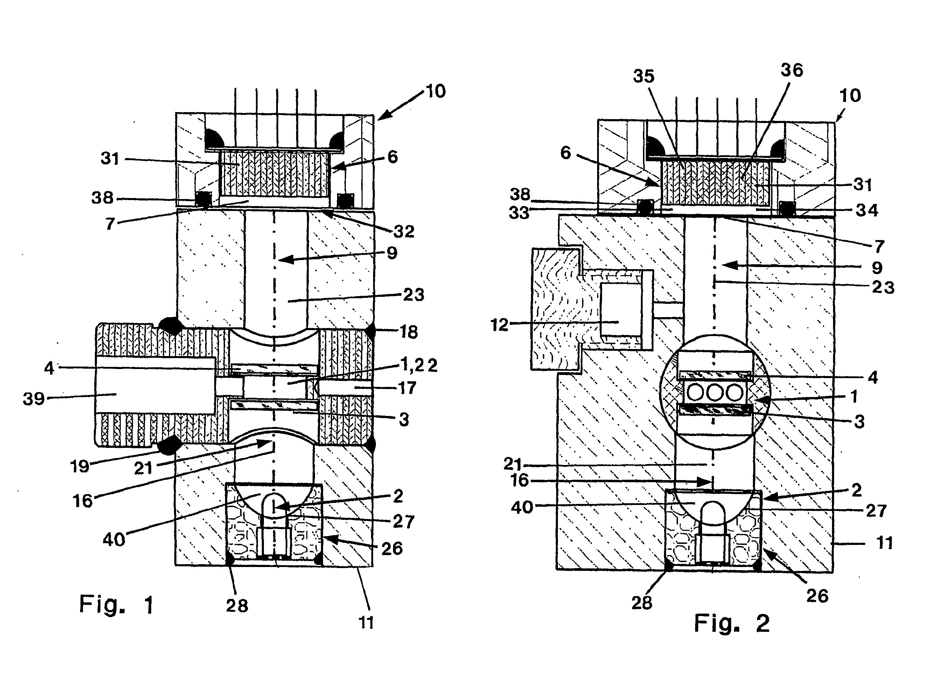

Im folgenden ist der Gegenstand der Erfindung anhand der Figuren 1 und 2 näher erläutert.
Figur 1 zeigt im Längsschnitt eine Messvorrichtung mit einer das Messgas enthaltenden Küvette, welche sich im Strahlengang zwischen einer IR-Strahlungsquelle (Temperaturstrahler) und einer Sensorvorrichtung mit vorgelagerten Filtern befindet;
Figur 2 zeigt die in der Messvorrichtung angeordnete Küvette im Querschnitt, wobei ebenfalls der Strahlengang zwischen Strahlenquelle und Sensor erkennbar ist. Darüber hinaus ist auch ein eigener Raum für ein Absorptionsmittel zur Absorption der zu messenden Gaskomponente erkennbar.

Gemäß Figur 1 befindet sich eine das Messgas, insbesondere Kohlendioxid, enthaltende Messküvette 1 im Strahlengang zwischen einer IR-Strahlenquelle 2 und einem IR-Detektor 6, in einer Messvorrichtung 10; aus der modulierten IR-Strahlenquelle 2 tritt Strahlung nach Durchlaufen einer ersten Teilstrecke 21 durch ein erstes IR-durchlässiges Fenster 3 in das Innere von Küvette 1 ein und nach Durchlaufen der Messstrecke als Teilstrecke 22 in der Küvette 1 tritt sie über ein zweites IR-durch-lässiges Fenster 4 der Küvette 1 heraus. Die Strahlung durchläuft dann eine vorgegebene Teilstrecke 23, bis sie zu einem IR-Detektor 6 mit vorgeschaltetem Filtersystem 7 gelangt. Sowohl zwischen der IR-Strahlenquelle 2 und dem ersten IR-durchlässigen Fenster 3 als auch zwischen dem zweiten IR-durchlässigen Fenster 4 und dem Filtersystem 7 des IR-Detektors sind die Teilstrecken 21, 23 jeweils als freie Strecken vorgesehen, die sich innerhalb eines abgeschlossenen Innenraumes 9 der Messvorrichtung 10 befinden.

Der hermetisch dicht abgeschlossene Innenraum 9 der Messvorrichtung 10 weist gemäß Figur 2 Absorptionsmittel in einem Reservoir 12 auf, welche den CO₂-Gehalt des Messgases im Innenraum 9 stark herabsetzen, so dass eine CO₂-Gehaltsmessung in der Küvette 1 keinesfalls durch weitere CO₂-Anteile in der Atmosphäre von Innenraum 9 gestört werden kann.

Die Abstände zwischen Messküvette 1 und IR-Strahlenquelle 2 als Teilstrecke 21 sowie zwischen Küvette 1 und Filtersystem 7 als Teilstrecke 23 sind so groß gewählt, dass beim Einsatz einer solchen Messvorrichtung in einem Brutschrank auch eine thermische Entkoppelung zwischen dem Inneren der Küvette 1 und der Strahlungsquelle 2 bzw. dem Detektor 6 mit Filtersystem 7 bei Desinfektionsverfahren im Bereich von ca. 100 °C ohne Beschädigung von optischen bzw. elektronischen Komponenten möglich ist.

Die optische Achse des von der IR-Strahlenquelle 2 ausgehenden Strahlenganges mit seinen Teilstrecken 21, 22, 23 ist mit 16 bezeichnet.

Das die Küvette 1 teilweise umfassende und den Innenraum 9 abschließende Gehäuse 11 der Messvorrichtung 10 besteht aus Kunststoff, vorzugsweise aus Polyethylentetraphtalat; es ist jedoch auch möglich einen anderen thermisch stabilen Kunststoff einzusetzen.

Die Strahlenquelle 2 ist gemäß Figur 1 und 2 in einem eigenständigen, rotationssymmetrischen Reflektormodul 26 aus wärmebeständigem Metall angeordnet, wobei ein thermischer Strahler als IR-Strahlenquelle dient. Der Modul 26 ist während des Betriebes mit dem Gehäuse 11 mechanisch fest und gasdicht verbunden. Auf der der Küvette 1 abgewandten Seite der Strahlenquelle 2 ist ein Reflektor 27 in einem konkav ausgebildeten Raum 40 des zylindersymmetrisch ausgebildeten Moduls 26 vorgesehen; vorteilhafterweise ist der konkave Raum 40 als Teil eines hohlen Rotationsellipsoiden im Modul 26 ausgebildet. In einer vorteilhaften Ausgestaltung weist der Reflektor 27 keine Beschichtung auf.

Die Strahlenquelle 2 sendet IR-Strahlung sowohl in dem durch CO₂-Absorption betroffenen Wellenlängenbereich von 4,2 µm bis 4,46 µm als auch in einem durch CO₂-Absorption nicht betroffenen Spektralbereich - beispielsweise von 3,9 µm bis 4,0 µm - aus; in dem von der CO₂₋Absorption nicht betroffenen Wellenlängenbereich findet eine Referenzmessung statt.

Gegenüber dem Gehäuse 11 ist der Reflektormodul 26 mittels eines umlaufenden O-Ringes 28 abgedichtet, wobei er im Falle eines Strahlerdefekts auf einfache Weise durch Schrauben gelöst und gegen ein Ersatzmodul ausgetauscht werden kann.

Der IR-Detektor 6 ist ebenfalls in einem austauschbaren, eigenständigen Modul 31 angeordnet, welcher mit seiner Stirnseite 32 den abgeschlossenen Innenraum 9 abdichtet, wobei die Dichtung durch einen umlaufenden O-Ring 38 erfolgt.

Im Bereich der Stirnseite 32 von Detektormodul 31 sind wenigstens zwei Interferenzfilter 33, 34 angeordnet, von denen ein erstes Filter 33 eine hohe Transmission nur für den durch CO₂-Absorption betroffenen Spektralbereich aufweist, während ein zweites Filter 34 eine hohe Transmission nur für einen außerhalb des von CO₂-Absorption betroffenen Spektralbereiches aufweist.

Die beiden Filter 33, 34 sind jeweils einem unterschiedlich positionierten Detektorbereich 35, 36 vorgeschaltet, welche der Intensität der jeweiligen Strahlung (d. h. Mess- und Referenzstrahlung) entsprechende elektrische Signale erzeugen, die einer hier nicht dargestellten Auswerteeinheit zugeführt werden.

Wie Figur 1 zu entnehmen ist, weist die Küvette 1 an ihrem dem CO₂-Eintritt 39 abgewandten Ende einer Heizvorrichtung 17 auf, welche das Messvolumen soweit aufheizt, dass eine Kondensation in der Messkammer von Küvette 1 verhindert wird. Die Abdichtung der Messküvette 1 gegenüber dem Gehäuse 10 der Messvorrichtung erfolgt durch umlaufende O-Ringe 18, 19, deren Wärmeausdehnungskoeffizient den Materialeigenschaften von Küvette und Gehäuse der Messvorrichtung angepasst ist. Weiterhin ist erkennbar, dass der IR-Detektor 6 mit Filtersystem 7 über eine umlaufende Silikonabdichtung 38 an das Gehäuse 11 der Messvorrichtung mechanisch fest angeschlossen ist. Die im Bereich von Küvette 1 befindlichen Dichtungen sind dabei hochtemperaturbeständig, während die Dichtungen 28, 38 im Bereich der IR-Strahlenquelle 2 bzw. des IR-Detektors 6 eine gute Temperaturverträglichkeit aufweisen, so dass sie bei der Dampfsterilisation im Bereich von ca. 100° aufgrund ihrer Abstände bzw. Teilstrecken 21, 23 zur Küvette 1 einer niedrigeren Temperaturbelastung ausgesetzt werden, als die der Messküvette 1 benachbart angeordneten Dichtungen 18, 19.

In einer besonders vorteilhaften Ausführung können eine oder mehrere der Dichtungen durch Zusammenkleben der Teile ersetzt werden.

Das Filtersystem 7 besteht aus Interferenzfiltern 33, 34, von denen ein erstes nur die Messwellenlänge im Absorptionsspektrum von CO₂ durchlässt, während ein zweites Interferenzfilter 34 nur zur Selektion der Referenzwellenlänge vorgesehen ist.

Die Messvorrichtung 10 zur Konzentrationsbestimmung von Gasen durch die Infrarotabsorption ist mit Wasserdampf sterilisierbar, ohne dass der Sensor den Betriebszustand ändert und eine Neueichung des Gerätes erforderlich ist. Die Messküvette 1 wird so weit aufgeheizt, dass die Messkammer stets um mehr als 4 Kelvin wärmer als die Umgebung oder die Sterilisationstemperatur ist.

Um die Wärmeübertragung zum Detektormodul 31 und zum thermischen Strahler 2, die an den Enden der Messvorrichtung angeordnet sind, zu senken, sind diese gegenüber der Messküvette 1 durch einen mit einem Inertgas gefüllten Hohlraum jeweils getrennt, der aus einem schlecht wärmeleitenden Material geschaffen ist. Aufgrund dieser Anordnung ist gewährleistet, dass an der Messküvette 1 immer die höchste Temperatur entsteht und eine Wasserkondensation an anderen Teilen in dem Brutschrank erfolgt. Wegen niedriger Wärmeübertragungsfaktoren zum Detektormodul 31 und deren Mess- bzw. Referenzdetektor 35, 36 sowie zum thermischen Strahler 2 werden vorgegebene Grenztemperaturen nicht überschritten. Die Materialien sind insgesamt nach ihren Wärmeausdehnungskoeffizienten ausgewählt.

Eine thermische Isolierung der Sensoren entsteht auch aufgrund eines Hohlraums zwischen den Detektorbereichen 35, 36 und dem abschließenden Gehäuse 11 mit dem Strahlengang 22.

## Patentansprüche

1. Messvorrichtung zur Konzentrationsbestimmung von Gasen in einem Brutschrank durch Infrarotabsorption mit einem gasdichten Gehäuse, in welchem sich eine modulierbare Strahlenquelle und zwei Strahlungsdetektoren befinden, wobei einer der Strahlungsdetektoren als Messdetektor und der andere als Referenzdetektor geschaltet ist, und
der Strahlengang zwischen Strahlenquelle und Strahlungsdetektoren in wenigstens drei Teil-Strecken (21, 22, 23) aufgeteilt ist, von denen die erste Strecke (21) sich zwischen der Strahlenquelle (2) und einem ersten infrarotdurchlässigen Fenster (3) befindet, die zweite Strecke (22) als dem Gas zugängliche Mess-Strecke ausgebildet ist und vom ersten infrarotdurchlässigen Fenster (3) zu einem zweiten infrarotdurchlässigen Fenster (4) reicht und die dritte Strecke (23) sich zwischen dem zweiten infrarotdurchlässigen Fenster (4) und den Strahlungsdetektoren befindet,
**dadurch gekennzeichnet,**
**dass** sich die Mess-Strecke in einer das Gehäuse nach außen abdichtenden Küvette (1) befindet, und die infrarotdurchlässigen Fenster das Innere des Gehäuses gegenüber der Mess-Strecke im Inneren der Küvette (1) abdichten, so dass die Mess-Strecke von der ersten und der dritten Teilstrecke des Strahlenganges durch jeweils nur ein infrarotdurchlässiges Fenster abgetrennt ist, wobei Gehäuse (11) und Küvette (1) eine Wärmeformbeständigkeit von bis zu wenigstens 100 °C aufweisen.

2. Messvorrichtung gemäß Anspruch 1,
**dadurch gekennzeichnet,**
**dass** die Küvette (1) mit einer Heizvorrichtung (17) zur Beheizung der Messkammer angeordnet ist.

3. Messvorrichtung nach einem der vorhergehenden Ansprüche,
**dadurch gekennzeichnet,**
**dass** sich im Strahlungsgang der Strahlenquelle (2) wenigstens ein Strahlungsteiler befindet.

4. Messvorrichtung nach einem der vorhergehenden Ansprüche,
**dadurch gekennzeichnet,**
**dass** die im Strahlengang der Mess-Strecke (22) befindlichen Fenster (3,4) aus Kalziumfluorid bestehen.

5. Messvorrichtung nach einem der vorhergehenden Ansprüche,
**dadurch gekennzeichnet,**
**dass** als Werkstoff der Küvette (1) außerhalb der Fenster Aluminium oder Messing eingesetzt ist.

6. Messvorrichtung nach einem der vorhergehenden Ansprüche,
**dadurch gekennzeichnet,**
**dass** sich eine erste und eine dritte Teilstrecke (21, 23) des Strahlenganges in jeweils für sich abgeschlossenen Innenräumen des Gehäuses (11) befinden.

7. Messvorrichtung nach einem der vorhergehenden Ansprüche,
**dadurch gekennzeichnet,**
**dass** sich im abgeschlossenen Inneren des Gehäuses (11) wenigstens ein Absorptionsmittel für Kohlendioxid befindet.

8. Messvorrichtung nach einem der vorhergehenden Ansprüche,
**dadurch gekennzeichnet,**
**dass** das Verhältnis der Länge der Mess-Strecke (22) zur Länge der im Inneren des Gehäuses geführten Teil-Strecken (21, 23) des Strahlenganges im Bereich von 1:4 bis 1:10 liegt.

9. Messvorrichtung nach einem der vorhergehenden Ansprüche,
**dadurch gekennzeichnet,**
**dass** eine einzige Strahlenquelle (2) vorgesehen ist, die auf ihrer der Messung abgewandten Seite einen Reflektor (27) aufweist.

10. Messvorrichtung nach einem der vorhergehenden Ansprüche,
**dadurch gekennzeichnet,**
**dass** die Strahlungsdetektoren zusammen mit dem Strahlungsteiler in einem das Innere des Gehäuses (11) abdichtenden Detektor-Modul (31) angeordnet sind, der mit dem Gehäuse lösbar verbunden ist.

11. Messvorrichtung nach einem der vorhergehenden Ansprüche,
**dadurch gekennzeichnet,**
**dass** die Strahlenquelle (2) in einem das Innere des Gehäuses abdichtenden Teilmodul aus Aluminium angeordnet ist, welche eine Ausnehmung in Form eines Rotationsellipsoids zur Bildung eines Reflektors (27) aufweist.

## Claims

1. Measuring device for determining the concentration of gases in an incubator by infrared absorption with a gas-tight housing in which a modulable radiation source and two radiation detectors are located, one of the radiation detectors being connected as a measuring detector and the other as a reference detector, and with the beam path between the radiation source and the radiation detectors being split into at least three partial sections (21, 22, 23), of which the first section (21) is located between the radiation source (2) and a first infrared-permeable window (3), the second section (22) is formed as the measurement section accessible to the gas and extends from the first infrared-permeable window (3) to a second infrared-permeable window (4), and the third section (23) is located between the second infrared-permeable window (4) and the radiation detectors,
**characterized in that**
the measurement section is located in a cuvette (1) which seals off the housing with respect to the outside, and that the infrared-permeable windows close off the interior of the housing with respect to the measurement section in the interior of the cuvette (1), so that only one infrared-permeable window each separates the measurement section from the first and third partial section of the beam path, with the housing (11) and the cuvette (1) having a thermostability of at least 100 °C.

2. Measuring device according to claim 1, **characterized in that** the measuring cuvette (1) is arranged with a heating device (17) for the heating of the measuring chamber.

3. Measuring device according to one of the preceding claims, **characterized in that** at least one beam splitter is located in the beam path of the radiation source (2).

4. Measuring device according to one of the preceding claims, **characterized in that** the windows (3, 4), which are located in the beam path of the measuring section (22), are made of calcium fluoride.

5. Measuring device according to one of the preceding claims, **characterized in that** aluminum or brass is used as the material of the cuvette (1) outside the windows.

6. Measuring device according to one of the preceding claims, **characterized in that** a first and a third partial section (21, 23) of the beam path are each located in seperately sealed interior spaces of the housing (11).

7. Measuring device according to one of the preceding claims, **characterized in that** at least one absorption agent for carbon dioxide is found in the sealed interior of the housing (11).

8. Measuring device according to one of the preceding claims, **characterized in that** the ratio of the length of the measuring section (22) to the length of the partial sections (21, 23) of the beam path, which pass through the interior of the housing is in the range of 1:4 to 1:10.

9. Measuring device according to one of the preceding claims, **characterized in that** a single radiation source (2) is provided, which has a reflector (27) on the side turned away from the measurement.

10. Measuring device according to one of the preceding claims, **characterized in that** the radiation detectors, together with the beam splitter, are located in a detector module (31), which seals off the interior of the housing (11) and which is connected to the housing in a detachable manner.

11. Measuring device according to one of the preceding claims, **characterized in that** the radiation source (2) is located in a submodule made of aluminum, which seals off the interior of the housing and which has a recess in the form of a rotation ellipsoid for the formation of a reflector (27).

## Revendications

1. Dispositif de mesure pour déterminer la concentration de gaz dans une étuve à incubation par absorption infrarouge avec un boîtier étanche au gaz dans lequel se trouvent une source de rayonnement modulable et deux détecteurs de rayonnement, l'un des détecteurs de rayonnement étant monté comme un détecteur de mesure et l'autre comme un détecteur de référence, et la trajectoire du rayonnement entre la source de rayonnement et les détecteurs de rayonnement est partagée en au moins trois tronçons de trajet (21, 22, 23), dont le premier tronçon (21) s'étend entre la source de rayonnement (2) et une première fenêtre laissant passer les infrarouges (3), le deuxième tronçon (22) est conformé comme le trajet de mesure accessible au gaz et va d'une première fenêtre laissant passer les infrarouges (3) à une deuxième fenêtre laissant passer les infrarouges (4) et le troisième tronçon (23) s'étend entre la deuxième fenêtre laissant passer les infrarouges (4) et les détecteurs de rayonnement, **caractérisé en ce que** le trajet de mesure se trouve dans une cuvette (1) qui isole le boîtier de l'extérieur, et les fenêtres laissant passer les infrarouges ferment l'intérieur du boîtier du trajet de mesure à l'intérieur de la cuvette (1) de telle sorte que le trajet de mesure est séparé du premier tronçon et du troisième tronçon de la trajectoire du rayonnement, respectivement, par une seule fenêtre laissant passer les infrarouges, le boîtier (11) et la cuvette (1) ayant une forme stable à haute température jusqu'à 100 °C au moins.

2. Dispositif de mesure selon la revendication 1, **caractérisé en ce que** la cuvette (1) est dotée d'un dispositif de chauffage (17) pour le chauffage de la chambre de mesure.

3. Dispositif de mesure selon l'une quelconque des revendications précédentes, **caractérisé en ce qu'**il est prévu au moins un séparateur de faisceaux dans la trajectoire de rayonnement de la source de rayonnement (2).

4. Dispositif de mesure selon l'une quelconque des revendications précédentes, **caractérisé en ce que** les fenêtres (3, 4) présentes dans la trajectoire du rayonnement sur le trajet de mesure (22) sont faites de fluorure de calcium.

5. Dispositif de mesure selon l'une quelconque des revendications précédentes, **caractérisé en ce que** le matériau de la cuvette (1) à l'extérieur des fenêtres est de l'aluminium ou du laiton.

6. Dispositif de mesure selon l'une quelconque des revendications précédentes, **caractérisé en ce qu'**un premier et un troisième tronçons (21, 23) de la trajectoire de rayonnement se trouvent chacun dans des compartiments intérieurs fermés du boîtier (11).

7. Dispositif de mesure selon l'une quelconque des revendications précédentes, **caractérisé en ce que** l'intérieur fermé du boîtier (11) contient au moins un absorbant pour le dioxyde de carbone.

8. Dispositif de mesure selon l'une quelconque des revendications précédentes, **caractérisé en ce que** le rapport entre la longueur du trajet de mesure (22) et la longueur des tronçons de trajet (21, 23) de la trajectoire de rayonnement passant à l'intérieur du boîtier est de l'ordre de 1/4 à 1/10.

9. Dispositif de mesure selon l'une quelconque des revendications précédentes, **caractérisé en ce qu'**il est prévu une seule source de rayonnement (2), qui possède un réflecteur (27) sur son côté opposé à la mesure.

10. Dispositif de mesure selon l'une quelconque des revendications précédentes, **caractérisé en ce que** les détecteurs de rayonnement sont disposés avec le séparateur de faisceaux dans un module de détecteur (31) fermant l'intérieur du boîtier (11) et relié de manière amovible au boîtier.

11. Dispositif de mesure selon l'une quelconque des revendications précédentes, **caractérisé en ce que** la source de rayonnement (2) est disposée à l'intérieur d'un sous-module en aluminium fermant l'intérieur du boîtier, qui présente un évidement en forme d'ellipsoïde de révolution destiné à former un réflecteur (27).
